# EUROPEAN PATENT SPECIFICATION

(11) **EP 2 117 282 B1**
(45) Date of publication and mention of the grant of the patent: **13.11.2013**
(21) Application number: 08703053.2
(22) Date of filing: 10.01.2008
(51) Int. Cl.: H05B 6/12, G01J 1/02, G01J 5/00

(54) **INDUCTION HEATING APPLIANCE FOR COOKING**
INDUKTIONSHEIZ-KOCHEINRICHTUNG
DISPOSITIF DE CUISSON A INDUCTION

(30) Priority: 10.01.2007 JP 2007002423; 10.01.2007 JP 2007002424
(43) Date of publication of application: 11.11.2009
(73) Proprietor: Panasonic Corporation, Kadoma-shi Osaka 571-8501 (JP)
(72) Inventor: WATANABE, Kenji, Chuo-ku, Osaka-shi, Osaka 540-6207 (JP); TOMINAGA, Hiroshi, Chuo-ku, Osaka-shi, Osaka 540-6207 (JP); NOGUCHI, Shintaro, Chuo-ku, Osaka-shi, Osaka 540-6207 (JP); ISODA, Keiko, Chuo-ku, Osaka-shi, Osaka 540-6207 (JP); TABUCHI, Sadatoshi, Chuo-ku, Osaka-shi, Osaka 540-6207 (JP); HIROTA, Izuo, Chuo-ku, Osaka-shi, Osaka 540-6207 (JP); FUJINAMI, Tomoya, Chuo-ku, Osaka-shi, Osaka 540-6207 (JP)
(74) Representative: Eisenführ, Speiser & Partner
(86) International application number: PCT/JP2008/050186
(87) International publication number: WO 2008/084829

(56) References cited:
- WO-A1-2007/091597
- JP-A- 2004 063 451
- JP-A- 2004 095 315
- JP-A- 2005 063 880
- JP-A- 2005 149 829
- JP-A- 2005 174 581
- JP-A- 2005 216 583
- JP-A- 2005 353 457
- JP-A- 2006 260 941
- JP-A- 2006 292 437
- JP-A- 2007 115 420

## Description

### Technical Field

The present invention relates to an induction heating appliance for cooking operable to detect a temperature of a cooking container using an infrared sensor.

### Background Art

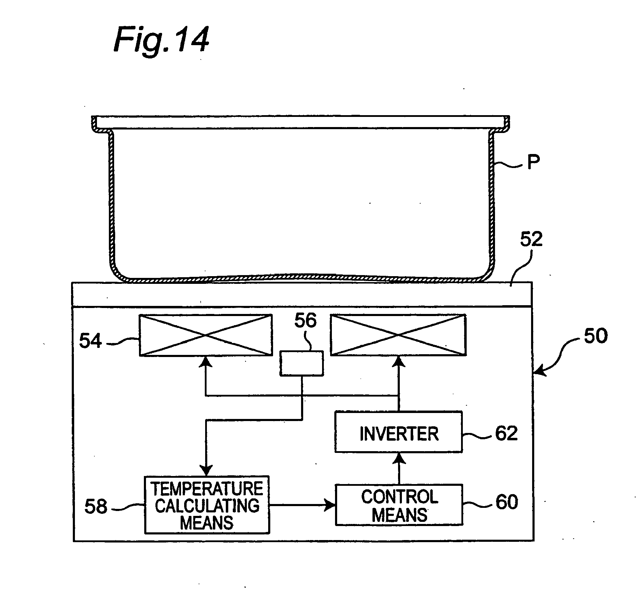

Recently, induction heating appliances for cooking are in common use as cooking appliances using no fire. A prior art induction heating appliance for cooking is explained hereinafter with reference to Fig. 14.

Fig. 14 is a block diagram showing a construction of the prior art induction heating appliance for cooking with the use of an infrared sensor as a temperature detecting means for a cooking container. This induction heating appliance for cooking includes a body 50 constituting an outer shell, a top plate 52 formed of a non-magnetic insulator such as, for example, a crystallized ceramic material having electric insulating properties and adapted to place a cooking container P thereon, an induction heating coil 54 disposed below the top plate 52 to induction heat the cooking container P, and an infrared sensor 56 disposed below the top plate 52 to output a signal based on a temperature of a bottom surface of the cooking container P upon detection of infrared rays emitted from the bottom surface of the cooking container P.

The output from the infrared sensor 56 is inputted to a temperature calculating means 58, which in turn calculates the temperature of the cooking container P based on the output signal from the infrared sensor 56. The temperature of the cooking container P calculated by the temperature calculating means 58 is inputted to a control means 60, which controls supply of a high frequency current to the heating coil 54 by controlling an inverter power source 62 based on temperature information obtained from the temperature calculating means 58.

Having been supplied with the high frequency current, the heating coil 54 generates a high frequency magnetic field, which in turn conducts interlinkage with the cooking container P, so that the cooking container P may be induction heated to generate heat. Accordingly, a material for cooking accommodated in the cooking container P is heated by the cooking container P, and the cooking progresses. During cooking, infrared rays of light emitted from the cooking container P pass through the top plate 52 and then reach the infrared sensor 56. This method of detecting the temperature with the use of the infrared sensor 56 is superior in thermal response and has the advantage of being able to control the temperature of the material to be cooked without any time lag (see, for example, Patent Document 1)

Document JP 2005 216583 A discloses an induction heating cooking device wherein a heating pan can be arranged on a top of a heating plate for being heated by varying magnetic fields generated by a heating coil which is arranged below the top plate at the position of the heating pan. The heating coil has a basic circular structure including an opening in a central portion of the coil. In this opening with a visual contact to the top plate an infrared ray detecting means is arranged to detect infrared rays which are radiated from the bottom surface of the pan when the pan is heated. According to the detected temperature of the bottom surface of the pan and the detection result being input to a control means, the control means adapts supply of power to the heating coil according to the detected temperature to obtain a desired heating level. Below the top plate a shielding means is arranged having an opening in the same area as the opening in the heating coil. The shielding means is provided to inhibit infrared rays not radiated from the pan to enter into the infrared ray detecting means, while the detecting means may be reached through the openings by the incident infrared rays from the pan.
Patent document 1: Japanese Laid-open Patent Publication No. 03-184295
Patent document 2: Japanese Laid-open Patent Publication No. 2005 216583

### Disclosure of the Invention

### Problems to be Solved by the Invention

In the prior art construction described in Patent Document 1, however, if intense light such as solar light is irradiated to the induction heating appliance for cooking through a window, it sometimes occurs that infrared rays contained in the solar light or the like would pass between the bottom surface of the cooking container P and the top plate 52 and reach the infrared sensor 56, or infrared rays that have penetrated the top plate 52 and entered the body 50 would be reflected by component parts disposed inside the body 50 or inner surfaces of the outer shell and reach the infrared sensor 56 from various directions. Accordingly, in an environment receiving solar light or the like, both the infrared rays emitted from the cooking container P and infrared rays contained in the solar light or the like are detected and, hence, it becomes difficult to accurately detect the temperature of the cooking container P, thus giving rise to a problem that the temperature of the cooking container P is hard to be controlled to a target temperature.

The present invention has been developed to overcome the above-described disadvantages.

It is accordingly an objective of the present invention to provide an induction heating appliance for cooking capable of controlling the temperature of the cooking container to the target temperature by accurately detecting the former even in an environment receiving solar light or the like.

According to the present invention the above objective is accomplished by an induction heating appliance as set out in the appended claims.

### Means to solve the Problems

In accomplishing the above objective, an induction heating appliance for cooking according to a first aspect of the present invention includes: a body constituting an outer shell; a top plate mounted on an upper portion of the body to place a cooking container thereon; a heating coil for generating a high frequency magnetic field to heat the cooking container; a quantum type infrared sensor disposed below the top plate to detect infrared rays that are emitted from the cooking container and pass through the top plate; a light guide portion having a lower opening confronting the infrared sensor, an upper opening confronting the top plate, and a light guide path communicating the lower opening with the upper opening; a control means for controlling a power supplied to the heating coil based on an output of the infrared sensor; a filter disposed between the infrared sensor and the lower opening in the light guide portion so as to confront a light receiving surface of the infrared sensor and having light shielding characteristics that allow transmission of infrared rays having a wavelength range, which the infrared sensor can detect, but restrain transmission of light of a wavelength range less than a predetermined wavelength, in which solar light is dominantly contained; a printed circuit board on which the infrared sensor is placed; and a side wall disposed around the infrared sensor to restrain transmission of solar light. The filter and a holding portion provided around the filter are unitarily formed of a resin, and the side wall is fitted into the holding portion. The filter and the side wall are placed on the printed circuit board, and the infrared sensor is covered with the filter, the side wall, and the printed circuit board.

An induction heating appliance for cooking according to a second aspect of the present invention includes: a body constituting an outer shell; a top plate mounted on an upper portion of the body to place a cooking container thereon; a heating coil for generating a high frequency magnetic field to heat the cooking container; a quantum type infrared sensor disposed below the top plate to detect infrared rays that are emitted from the cooking container and pass through the top plate; a light guide portion having a lower opening confronting the infrared sensor, an upper opening confronting the top plate, and a light guide path communicating the lower opening with the upper opening; a control means for controlling a power supplied to the heating coil based on an output of the infrared sensor; a filter disposed between the infrared sensor and the lower opening in the light guide portion so as to confront a light receiving surface of the infrared sensor and having light shielding characteristics that allow transmission of infrared rays having a wavelength range, which the infrared sensor can detect, but restrain transmission of light of a wavelength range less than a predetermined wavelength, in which solar light is dominantly contained; a printed circuit board on which the infrared sensor is placed; and a side wall disposed around the infrared sensor to restrain transmission of solar light. The filter and a holding portion provided around the filter are unitarily formed of a resin, and the holding portion is fitted into the side wall. The filter and the side wall are placed on the printed circuit board, and the infrared sensor is covered with the filter, the side wall, and the printed circuit board.

In the first or second aspect of the present invention, it is preferred that the filter has light shielding characteristics in which a transmittance of light having a wavelength less than approximately 0.9µm is lower than that of light having a wavelength greater than approximately 0.9µm in a wavelength range in which the output of the infrared sensor can be obtained.

It is preferred that the infrared sensor be made of a silicon photodiode having a maximum sensitivity wavelength in a range of about 0.9µm to about 1µm.

In the first or second aspect of the present invention, the filter may be made of a resin, and has a lens for concentrating infrared rays emitted from the cooking container and having passed through the top plate on the infrared sensor and a lens holding portion unitarily formed with and around the lens to hold the lens. The side wall has an upper portion unitarily formed therewith so as to extend generally parallel to the printed circuit board, and the lens is fitted into an opening defined in the upper portion.

In the first or second aspect of the present invention, the induction heating appliance for cooking further includes a coil support base formed to fixedly mount the heating coil thereon and having a light guide portion formed therewith, and a metallic case for accommodating the printed circuit board, the infrared sensor, and the filter therein. The metallic case has a first opening defined in an upper wall thereof so as to confront the infrared sensor so that infrared rays emitted from the cooking container and having passed through the light guide portion are received by the infrared sensor through the first opening, and a second opening defined in a side wall of the metallic case so that a cable for outputting a signal passes through the second opening. The upper wall of the metallic case is preferably held in contact with a lower surface of the coil support base.

In this case, a control panel is further provided at a front portion of the body to initiate a heating operation, and the metallic case is positioned below the heating coil and on a side of the control panel relative to a center of the heating coil. Preferably, the second opening is open toward the control panel.

In the first or second aspect of the present invention, the upper opening is provided at a location on a straight line, which extends across a center of the heating coil in a direction perpendicular to a front surface of the body, and forwardly of the center of the heating coil. The top plate may have a cutout or indication formed by printing so as to confront the upper opening, the cutout or indication being an infrared incident region which a user can view.

There are further provided an electrostatic type touch-sensitive operating portion having electrodes fitted to a lower surface of a front portion of the top plate to initiate a heating operation, and a display having a light emitting portion disposed below the front portion of the top plate, wherein light emitted from the light emitting portion and having passed through the top plate can be viewed as a luminescent display from above the top plate. The second opening is open toward a side opposite to the display.

### Effects of the Invention

The induction heating appliance for cooking according to the first aspect of the present invention includes an infrared sensor made of a quantum type photodiode and disposed below the top plate to detect infrared rays that are emitted from the cooking container and pass through the top plate, a light guide portion having a light guide path that communicates a lower opening confronting the infrared sensor with an upper opening confronting the top plate, a control means for controlling a power supplied to the heating coil based on an output of the infrared sensor, a filter disposed between the infrared sensor and the lower opening in the light guide portion and having light shielding characteristics that allow transmission of infrared rays having a wavelength range, which the infrared sensor can detect, but restrain transmission of light of a wavelength range less than a predetermined wavelength, in which solar light is dominantly contained, and a side wall disposed around the infrared sensor to restrain transmission of solar light. Because the infrared sensor is covered with the filter and the side wall, the temperature of the cooking container can be accurately detected and controlled to a target temperature even in an environment receiving ambient light such as solar light or the like.

The provision of the light guide portion having the light guide path that communicates the lower opening confronting the infrared sensor with the upper opening confronting the top plate can limit a view angle of the infrared sensor and restrain ambient light from entering the infrared sensor. Also, the provision of the infrared sensor below the heating coil can reduce influence of the high temperature of the heating coil and that of the cooking container on the infrared sensor. Because unnecessary wavelength components of incident light from the light guide portion are removed by the filter having light shielding characteristics to restrain transmission of light less than a predetermined wavelength in which solar light is dominantly contained, the influence of ambient light is further restrained.

Even if infrared rays other than those passing through the light guide portion pass between the bottom surface of the cooking container and the top plate and reach the infrared sensor, or infrared rays such as solar light penetrate the top plate at locations where the cooking container is not placed, reflect inside the induction heating appliance for cooking, and reach the infrared sensor from various directions, the filter and the side wall act to block or restrain infrared rays from other than the cooking container, thus making it possible to further restrain the influence of ambient light and accurately control the temperature of the cooking container to the target temperature.

Also, because the filter has light shielding characteristics in which a transmittance of light having a wavelength less than approximately 0.9µm is lower than that of light having a wavelength greater than approximately 0.9µm in a wavelength range in which the output of the infrared sensor can be obtained, the filter can block solar light in a frequency band of high energy density, but allows infrared energy required for measurement of the temperature of the bottom surface of the cooking container below 350°C to pass therethrough, so that the infrared sensor can accurately detect the temperature of the cooking container.

Further, the infrared sensor has a maximum sensitivity wavelength in a range of approximately 0.9µm to 5µm, and the control means controls the temperature of the bottom surface of the cooking container within a predetermined temperature range below 350°C based on the output of the infrared sensor, thus making it possible to restrain dominant energy of solar light and allow transmission of infrared energy required for measurement of the temperature of the bottom surface of the cooking container below 350°C. Also, because the maximum sensitivity wavelength of the infrared sensor is rendered to be less than about 5µm so that the transmittance of a crystallized ceramic may increase, the crystallized ceramic is less susceptible to the influence of temperature. It is further preferred that the maximum sensitivity wavelength of the infrared sensor be set to be less than about 2.5µm so that the transmittance of the crystallized ceramic may stably increase.

The use of an infrared sensor made of a silicon photodiode having a maximum sensitivity wavelength in a range of about 0.9µm to about 1µm can obtain an output signal in the form of a multidimensional function with a sharp rise, which rises at a temperature of about 250°C, and a gradient of increase of which subsequently increases with an increase of the temperature of the bottom surface of the cooking container. Accordingly, by measuring an output increment with respect to an output at the time of start of heating, accurate measurements by the infrared sensor can be conducted using an inexpensive silicon photodiode.

Also, because the side wall and the filter are provided on the printed circuit board on which the infrared sensor is placed, the printed circuit board acts to prevent entry of ambient light from below the printed circuit board, and the provision of an amplifier or the like on the printed circuit board can increase the output of the infrared sensor and reduce the influence of noises.

When the filter is made of a resin, and has a lens for concentrating infrared rays emitted from the cooking container and having passed through the top plate on the infrared sensor and a lens holding portion unitarily formed with and around the lens to hold the lens, a construction for realizing a light concentrating function and a filtering function is simplified and, hence, it becomes easy to mount such construction on the printed circuit board or the like, thus resulting in a reduction in cost. Also, fixing the lens holding portion determines the position of the lens, thereby making it possible to enhance the accuracy in relationship between the lens and the light receiving surface of the infrared sensor, and enhance the accuracy in field of view.

When the side wall and the filter are unitarily formed of a resin, no gaps are created between the side wall and the filter to thereby further prevent entry of ambient light such as solar light and simplify assemblage.

When the printed circuit board is accommodated in a metallic case, which has a first opening, through which infrared rays from the cooking container are received by the infrared sensor, and a second opening through which a cable for outputting a signal passes, the metallic case acts to block ambient light such as solar light, together with the filter and the side wall.

The cooking appliance is frequently installed near a wall, which is generally provided with a window and, hence, solar light is frequently irradiated to a rear side of the cooking appliance. Accordingly, when a control panel for initiating a heating operation is disposed at a front portion of the body, and the metallic case is provided below the heating coil and on a side of the control panel relative to a center of the heating coil, the metallic case comes to be positioned on a side opposite to the direction of irradiation of solar light, thus making it possible to prevent the influence of solar light. Also, because the control means is generally provided on a side of the control panel, connection between the control means and the cable of the infrared sensor can be easily conducted.

When the second opening is open toward the control panel, the direction of irradiation of solar light is on a side opposite to the second opening in an environment in which the solar light is irradiated to the rear side of the cooking appliance, thus preventing the influence of solar light.

When the upper opening is provided at a location on a straight line, which extends across the center of the heating coil in a direction perpendicular to a front surface of the body, and forwardly of the center of the heating coil, the user can place the cooking container on the top plate so as to cover an infrared incident region of the top plate, which confronts the upper opening and on which infrared rays from the cooking container are incident, with the bottom surface of the cooking container at a location where the user can view the infrared incident region most easily. By so doing, the temperature detection of the cooking container by the infrared sensor can be positively and easily conducted, and the provision of the infrared incident region at only one location can minimize the number of infrared sensors, resulting in a reduction in cost.

In the case where the induction heating appliance for cooking includes an electrostatic type touch-sensitive operating portion having electrodes fitted to a lower surface of a front portion of the top plate to initiate a heating operation, and a display having a light emitting portion disposed below the front portion of the top plate, wherein light emitted from the light emitting portion and having passed through the top plate can be viewed as a luminescent display from above the top plate, if the front portion of the appliance is directed to a window side, the influence of solar light can be extremely reduced by making the second opening, through which the cable passes, open to a side opposite to the display.

### Brief Description of the Drawings

Fig. 1 is a schematic sectional view of an induction heating appliance for cooking according to the present invention.
Fig. 2 is a sectional view of an essential portion in the vicinity of an infrared incident region of a top plate mounted on the induction heating appliance for cooking of Fig. 1.
Fig. 3 is a graph showing a relationship between a wavelength of light and a transmittance of the top plate mounted on the induction heating appliance for cooking of Fig. 1.
Fig. 4 is a graph showing a relationship between the wavelength of light and an optical sensitivity of an infrared sensor mounted in the induction heating appliance for cooking of Fig. 1.
Fig. 5 is a graph showing a relationship between the wavelength of light and a transmittance of a filter mounted in the induction heating appliance for cooking of Fig. 1.
Fig. 6 is a graph showing a relationship between a wavelength and an energy density of solar light.
Fig. 7 is a graph showing a relationship between the wavelength of light and a spectral radiance intensity of a black body.
Fig. 8 is a schematic view showing a condition in which the induction heating appliance for cooking has been installed.
Fig. 9 is a sectional view showing a modification of the filter.
Fig. 10 is an exploded perspective view of a filter unit including a further modification of the filter.
Fig. 11 is an exploded perspective view of an essential portion of the filter unit of Fig. 10.
Fig. 12 is a sectional view of the filter unit of Fig. 10.
Fig. 13 is a schematic sectional view showing a modification of a metallic case mounted in the induction heating appliance for cooking of Fig. 1.
Fig. 14 is a block diagram showing a construction of a prior art induction heating appliance for cooking.

### Explanation of Reference Numerals

| | | | |
|---|---|---|---|
| 2 | body, | 4 | top plate, |
| 4a | printed film, | 4b | colored printed film, |
| 4c | light absorbing film, | 4d | infrared incident region, |
| 4e | operating portion, | 4f | display, |
| 4g | electrode, | 5 | light emitting portion, |
| 6 | heating coil, | 6a | inner coil, |
| 6b | outer coil, | 6c | gap, |
| 8 | coil support base, | 8a | light guide portion, |
| 8b | light guide path, | 8c | center, |
| 10 | infrared sensor, | 10a | light receiving surface, |
| 12 | substrate, | 12a | hole, |
| 14 | filter, | 14a | periphery of lens, |
| 14b | holding portion, | 16 | side wall, |
| 18 | lens, | 19 | filter unit, |
| 20 | connector, | 21 | light shielding case, |
| 21a | upper portion, | 21b | side wall, |
| 21c | retaining hook, | 22 | cable, |
| 23 | lens unit, | 23a | upper portion, |
| 23b | holding portion, | 23c | lens, |
| 24 | control means, | 26 | control panel, |
| 28 | inverter power source, | 30 | metallic case, |
| 32 | lower opening, | 33 | opening, |
| 34 | opening, | 36 | upper opening, |
| 40 | wall, | 42 | window, |
| C | induction heating appliance for cooking, | | |
| L | solar light, | P | cooking container, |
| S | sun. | | |

### Best Mode for Carrying out the Invention

An embodiment of the present invention is explained hereinafter with reference to the drawings.

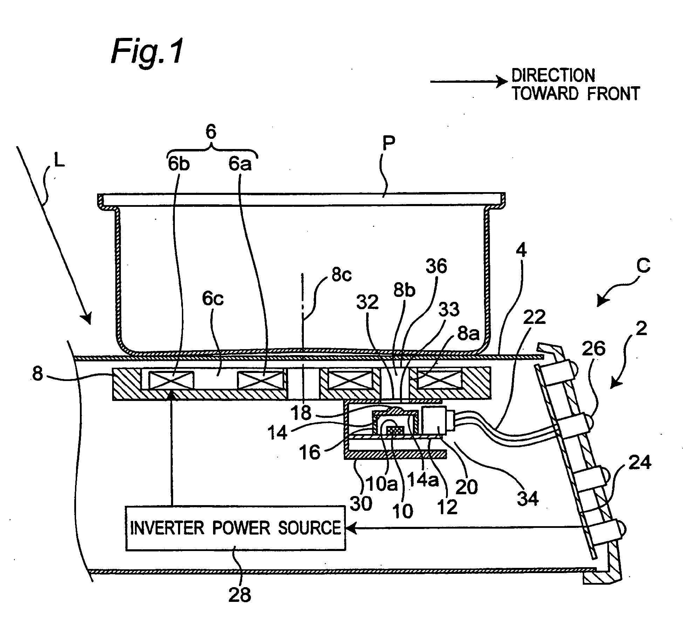

Fig. 1 is a schematic sectional view of an induction heating appliance C for cooking according to the present invention. As shown in Fig. 1, the induction heating appliance C for cooking according to the present invention includes a body 2 constituting an outer shell or framework, a top plate 4 mounted on an upper portion of the body 2 to place thereon a cooking container P such as a pan or the like and formed of a material such as a crystallized glass (also referred to as a crystallized ceramic) having electric insulating properties through which infrared rays are transmittable, and a heating coil 6 disposed below the top plate 4 and operable to generate a high frequency magnetic field in the range of 20kHz to 100kHz.

The heating coil 6 is fixedly mounted on a coil support base 8 made of a resin or the like, and has an inner coil 6a and an outer coil 6b both divided concentrically. An infrared sensor 10 is disposed below the top plate 4. The coil support base 8 has a light guide portion 8a formed therewith and having a light guide path 8b defined therein. The light guide portion 8a has a lower opening 32 confronting the infrared sensor 10 and an upper opening 36 confronting the top plate 4, and the light guide path 8b communicates the lower opening 32 with the upper opening 36. In Fig. 1, the light guide portion 8a is unitarily formed with the coil support base 8 by resin molding, but the light guide portion 8a may be made as a separate component part, which is to be mounted on the coil support base 8. The light guide portion 8a may be formed of a plurality of component parts. A gap 6c is defined between the inner coil 6a and the outer coil 6b, and the infrared sensor 10 is positioned below the gap 6c to output a signal corresponding to a temperature of a radially intermediate portion of a bottom of the cooking container P. The infrared sensor 10 is placed on a substrate (printed circuit board) 12.

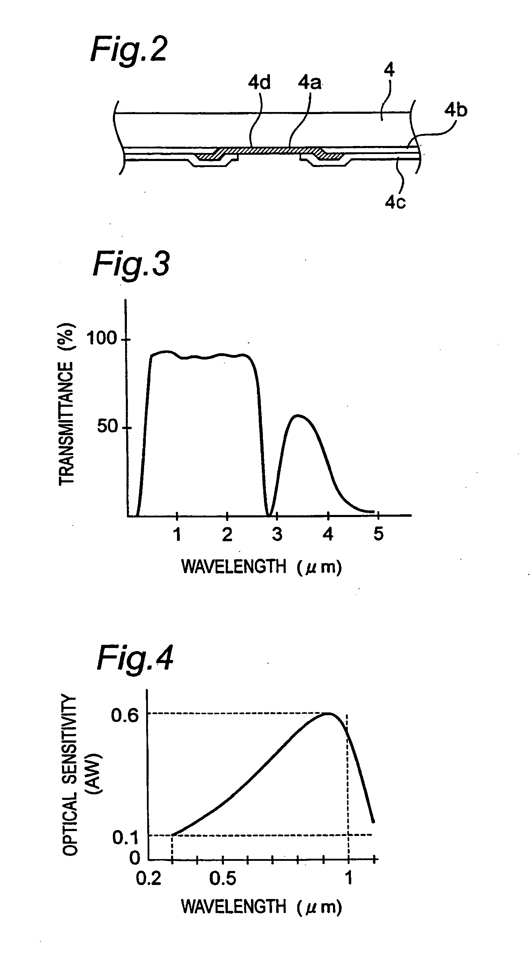

The upper opening 36 in the coil support base 8 is an infrared incident port positioned adjacent the top plate 4 so as to confront an infrared incident region 4d (see Fig. 2) formed on a lower surface of the top plate 4. The upper opening 36 communicates with the lower opening 32 through the light guide path 8b in the light guide portion 8a unitarily formed with the coil support base 8. The light guide path 8b is a tubular optical path that communicates the upper opening 36 with the vicinity of the infrared sensor 10. The light guide portion 8a, the infrared incident region 4d, and the upper opening 36 confronting the infrared incident region 4d are provided at one location in the vicinity of a straight line, which extends across a center 8c of the heating coil 6 in a direction perpendicular to a front surface of the appliance, and forwardly of the center 8c of the heating coil 6 (on the side of a user). This arrangement enables the user to place the cooking container P on the top plate 4 so as to cover the infrared incident region 4d with the bottom surface of the cooking container P at a location where the user can most easily view the infrared incident region 4d, thereby allowing the infrared sensor 10 to accurately and easily detect the temperature of the cooking container P. Although there is a possibility that solar light enters through a window from behind, such arrangement has the advantage of being less susceptible to influence which would be brought about by the solar light, because the infrared incident region 4d is positioned forwardly of a bottom center of the cooking container P. Also, because the infrared incident region 4d is positioned forwardly of the center 8c of the heating coil 6, the temperature of that portion of the bottom surface of the cooking container P which attains a higher temperature (than the position of the center 8c) can be detected, thus making it possible to enhance the response. Further, because the infrared incident region 4d is provided at only one location, the number of infrared sensors can be reduced, resulting in an inexpensive induction heating appliance for cooking.

It is preferred that a window confronting the infrared incident region 4d of the top plate 4 or the upper opening 36 be printed so that the user can view the position of the infrared incident region 4d or the upper opening 36. Alternatively, light may be irradiated to the position of the infrared incident region 4d or the upper opening 36, or the vicinity thereof from below the top plate 4.

As shown in a sectional view of Fig. 2, the top plate 4 has a colored printed film 4b (for example, a silver color) formed with a cutout (in the form of a circle, rectangle or the like) so as to leave the infrared incident region 4d, so that the infrared incident region 4d can be viewed from above the top plate 4. The infrared incident region 4d is formed with a printed film 4a that absorbs black or brown light slightly (transmittance is , for example, about 80%). The printed film 4a is intended to control influence of ambient light. A light absorbing film 4c having a high light absorptivity (absorptivity is, for example, more than 90%), is formed on a surface of the colored printed film 4d by printing. In applications where the top plate 4 itself is formed of a material colored in black and having a light transmittance, the printed film 4a and the colored printed film 4b may be dispensed with. A printed indication that allows the user to view the infrared incident region 4d may be provided on the surface of the top plate 4.

Fig. 3 is a graph showing a relationship between a wavelength of light and a transmittance of the top plate 4 made of a crystallized ceramic material. As shown in Fig. 3, this top plate 4 hardly transmits infrared rays having a wavelength greater than 5µm. The top plate 4 has stable infrared transmission characteristics in which the transmittance with respect to infrared rays having a wavelength ranging from 0.5µm to 2.5µm is about 90%. Generally, when the transmittance is low, the emissivity of the top plate 4 increases and, hence, the amount of radiation of infrared rays also increases. For this reason, if infrared rays that have been emitted from the bottom surface of the cooking container P and have passed through the top plate 4 are detected in a range of wavelength in which the transmittance is low, when the top plate 4 reaches a high temperature, infrared rays emitted from the top plate 4 itself enter the infrared sensor 10, thereby causing a reduction in accuracy of the temperature detection of the bottom surface of the cooking container P. Accordingly, it is desirable that a wavelength at which the infrared sensor 10 exhibits a maximum light receiving sensitivity be set below 5µm and, more preferably, below 2.5µm.

The infrared sensor 10 is made of a silicon photodiode and has an upper surface employed as a light receiving surface 10a on which infrared rays are incident. A planar surface in the form of, for example, a square having a length and a width of 2mm to 4mm is employed as the light receiving surface 10a.

In order to restrain visible light such as solar light from entering the infrared sensor 10, a filter 14 generally in the form of a flat plate is disposed above the infrared sensor 10 so as to confront the light receiving surface 10a of the infrared sensor 10, and a side wall 16 is disposed around the infrared sensor 10 to block or restrain transmission of the visible light. The filter 14 is positioned between the infrared sensor 10 and the lower opening 32 in the light guide portion 8a, and has light shielding characteristics that allow infrared rays having a range of wavelengths in which the infrared sensor 10 can detect to pass therethrough, but restrain transmission of visible light having a wavelength less than a predetermined one. The filter 14 is mounted on the substrate 12 via the side wall 16 encircling the infrared sensor 10, and the infrared sensor 10 placed on the substrate 12 is covered with the filter 14 and the side wall 16. The filter 14 is made of a metal, resin or the like that can completely block the visible light or has a light shielding effect higher than the material of the filter 14. The filter 14 is also made of a resin or the like and has a lens 18 unitarily formed with a periphery 14a thereof at a location immediately above the infrared sensor 10. The lens 14 is intended to efficiently concentrate infrared rays emitted from the bottom of the cooking container P on the light receiving surface 10a of the infrared sensor 10.

An amplifier (not shown) for amplifying an output signal from the infrared sensor 10 is mounted on the substrate 12. The output signal from the infrared sensor 10 is amplified by the amplifier and then inputted to a control means 24 via cables 22 connected to a connector 20. A control panel 26 for controlling the induction heating appliance C for cooking is provided forwardly of the control means 24.

When a heating operation is initiated by operating the control panel 26, the control means 24 controls an inverter power source 28, which supplies a high frequency power to the heating coil 6, based on the output signal from the infrared sensor 10 to thereby regulate the temperature of the cooking container P to a desired temperature. In order for the control means 24 to control the power supplied to the heating coil 6 based on the output from the infrared sensor 10 to thereby regulate the temperature of the cooking container P, the control means 24 may convert the output from the infrared sensor 10 to a temperature or estimate a temperature rise of the cooking container P by measuring a change ΔV in output voltage (V) of the infrared sensor 10.

The substrate 12, on which the infrared sensor 10 is placed, is accommodated within a metallic case 30, which has an opening 33 defined in an upper wall thereof at a location confronting the infrared sensor 10 to allow infrared rays from the cooking container P to pass therethrough. The metallic case 30 has a plurality of side walls, one of which has an opening 34 defined therein. The opening 34 is open toward the control panel 26 positioned at a front portion of the induction heating appliance C for cooking to allow the cables 22 to pass therethrough.

Fig. 4 is a graph showing spectral sensitivity characteristics that indicate a relationship between the wavelength of light and an optical sensitivity of a silicon photodiode employed as the infrared sensor 10. The optical sensitivity is indicated by an output current A that was obtained when infrared rays of 1W have been incident on the infrared sensor 10. Generally, the spectral sensitivity characteristics of the quantum type infrared sensor 10 such as a silicon photodiode exhibit a maximum sensitivity at a predetermined wavelength (maximum sensitivity wavelength). Accordingly, the intensity of infrared rays can be accurately measured at frequencies in the vicinity of the maximum sensitivity wavelength. It is to be noted that the spectral sensitivity characteristics are not limited to those shown in Fig. 4. The infrared sensor 10 is required to have a sensitivity at which the magnitude of infrared energy can be differentiated in a frequency range of infrared rays that are emitted depending on the temperature of the bottom of the cooking container P to be measured.

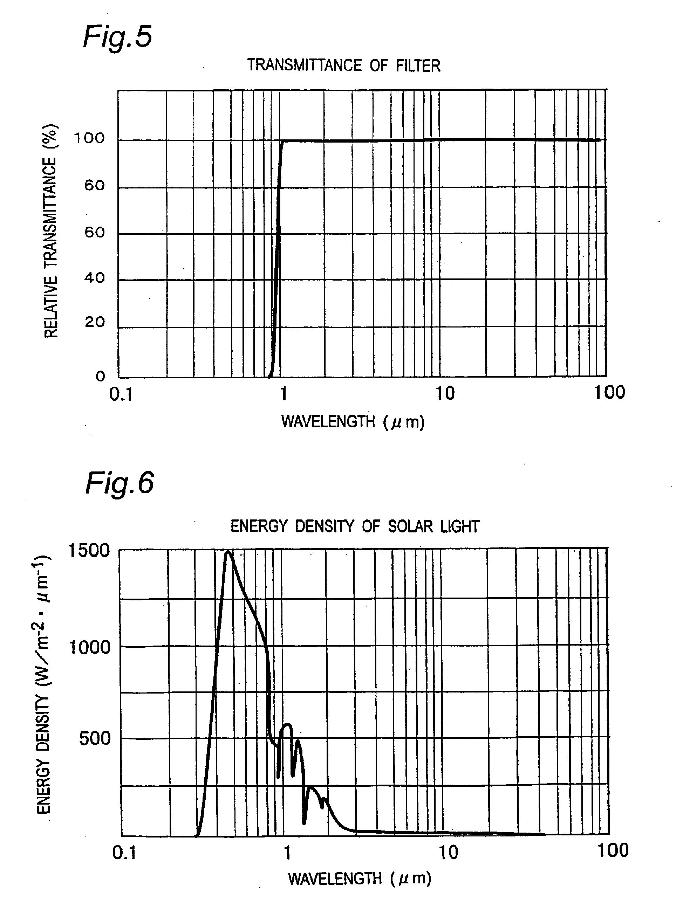

Fig. 5 shows a relative transmittance of the filter 14, which has been converted with a maximum value of an absolute transmittance rendered to be 100%. As shown in Fig. 5, the relative transmittance of the filter 14 is approximately 0% with respect to light having a wavelength less than 0.9µm, 50% with respect to light having a wavelength of 0.96µm, and 100% with respect to light having a wavelength of 1.1µm. The maximum value of the absolute transmittance of the filter 14 referred to above with reference to Fig. 5 is 90%. As can be seen from above, the filter 14 has light shielding characteristics in which the transmittance of light having a wavelength less than approximately 0.9µm is lower than that of light having a wavelength greater than approximately 0.9µm in a wavelength range in which the output of the infrared sensor 10 as shown in Fig. 4 can be obtained.

Fig. 6 shows a relationship between the wavelength of light and an energy density of solar light. As shown in Fig. 6, the energy density takes local minimum values at wavelengths of 0.93µm, 1.4µm, and 1.9µm. The energy density of solar light is very high in a wavelength range below 0.9µm, and takes a maximum value at a wavelength of 0.48µm. Accordingly, the provision of the filter 14 makes it possible to selectively shield the solar light in a wavelength range in which the solar light energy is high.

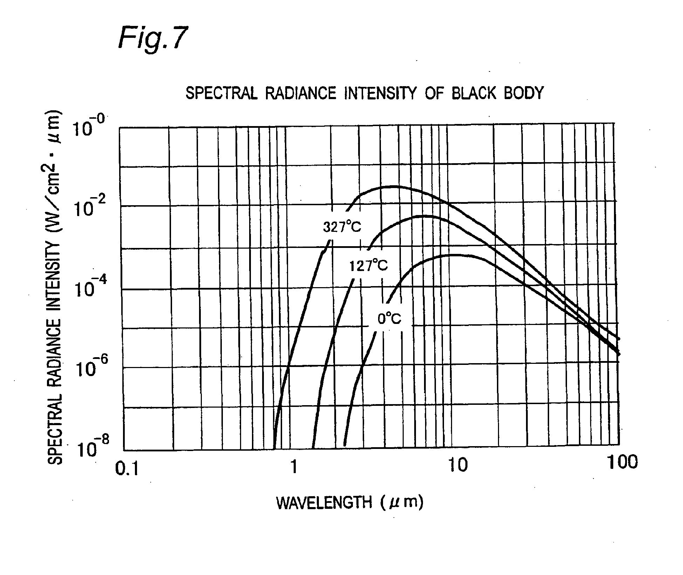

Fig. 7 is a graph showing a relationship between the wavelength of light and a spectral radiance intensity of a black body in a temperature range in the vicinity of about 300°C which the induction heating appliance C for cooking according to the present invention controls. The emissivity of the black body is 1, and the emissivity of the bottom of the cooking container P during cooking may become a value considerably smaller than 1. Accordingly, the spectral radiance intensity of the bottom of the cooking container P during cooking is equivalent to the one in which the spectral radiance intensity of the black body as shown in Fig. 7 has been entirely shifted downwardly. The spectral intensity of the bottom of the cooking container P differs depending on the temperature, material, or surface treatment thereof. At a temperature of 100°C, for example, the spectral intensity takes different values such as 0.2 (for example, copper plated one), 0.4 (stainless steel-made one), and 1 (black-painted one). Accordingly, at a temperature of about 300°C, infrared rays emitted from the cooking container P contain almost no infrared rays having a wavelength less than 0.9µm. For this reason, the use of the filter 14 and the infrared sensor 10, the maximum sensitivity wavelength of which has been set to be greater than 0.9µm, renders the infrared sensor 10 to be less susceptible to influence of incident light from outside, thus making it possible to accurately control the temperature of the bottom surface of the cooking container P within a predetermined temperature range below 350°C.

As described above, it is desirable that the maximum sensitivity wavelength at which the light receiving sensitivity of the infrared sensor 10 becomes maximum be set below 5µm and, more preferably, below 2.5µm.

Further, the use of an infrared sensor made of a silicon photodiode having a maximum sensitivity wavelength in a range of about 0.9µm to about 1µm as the infrared sensor 10 makes it possible to control the temperature of the bottom surface of the cooking container P within the predetermined temperature range below 350°C at a low cost.

As can be seen from a comparison (superposition) of the characteristics of Fig. 4 with those of Fig. 7, almost no outputs are obtained from the infrared sensor 10 until the temperature of the cooking container P reaches about 250°C. As the temperature increases in a temperature range over about 250°C, the output of the infrared sensor 10 increases in the form of a multidimensional function with an increasing temperature gradient. Accordingly, the temperature of the bottom surface of the cooking container P can be controlled to, for example, about 300°C within the predetermined temperature range over about 250°C and below about 350°C with a quick response by controlling, for example, an increasing amount ΔV of a current output voltage with respect to the output V of the infrared sensor 10 at the time of a heating start to a predetermined value or within a predetermined range, as described above, while relieving influence of constant ambient light or that of the emissivity of the cooking container P with a simple construction. That is, the temperature of the bottom surface of the cooking container P can be regulated within the temperature range below about 350°C by heating the cooking container P with a high heating power. Accordingly, the cooking of fried dishes can be conducted at a high temperature with a high power while positively preventing oil from catching fire. Also, the work of preheating the cooking container P at a high temperature with a high power can be assuredly accomplished within a short period of time while preventing the cooking container P from reaching a higher temperature.

The operation of the induction heating appliance C for cooking of the above-described construction is explained hereinafter.

When a heating operation is initiated upon operation of the control panel 26, the control means 24 supplies the heating coil 6 with a high frequency power via the inverter power source. The high frequency power supplied to the heating coil 6 causes the heating coil 6 to generate an induction field, which in turn increases the temperature of the cooking container P by induction heating. The increase in temperature of the cooking container P causes the cooking container P to emit infrared energy generally in proportion to the fourth power of an absolute temperature thereof, as indicated by the Stefan-Boltzmann's law. Infrared rays emitted from the cooking container P pass through the upper opening 36 in the coil support base 8 and through the opening 33 in the metallic case 30 accommodating the infrared sensor 10 therein, and then penetrate the filter 14 so provided as to cover the infrared sensor 10 before they reach the infrared sensor 10.

Further, when the temperature of the cooking container P becomes high, the output signal of the infrared sensor 10 that has received the infrared energy increases. As described above, this output signal is amplified by the amplifier and inputted to the control means 24, which in turn calculates the temperature of the cooking container P. The control means 24 performs an ON/OFF control or a power control of the high frequency power outputted from the inverter power source 28, so that the calculated temperature of the cooking container P may become equal to a predetermined temperature set in advance.

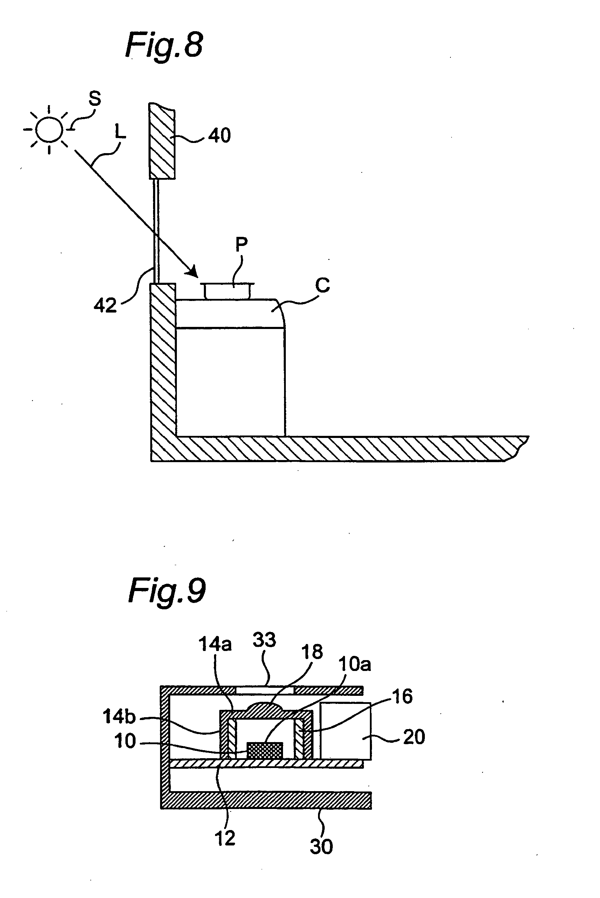

Fig. 8 shows a general condition in which the induction heating appliance C for cooking has been installed. As shown therein, the induction heating appliance C for cooking is installed so as to be held in contact with a wall 40, which is generally provided with a window 42. In such a condition, solar light L emitted from the sun S passes through the window 42 and is irradiated to a rear side of the induction heating appliance C for cooking. In some cases, a part of the solar light L irradiated to the induction heating appliance C for cooking passes between the bottom surface of the cooking container P and the top plate 4 and reaches the infrared sensor 10, or penetrates the top plate 4 into the induction heating appliance C for cooking and is reflected by the outer shell or some component parts, and the reflected light may be irradiated to the infrared sensor 10 through the opening 34 in the metallic case 30, through which the cables 22 extend.

However, in the induction heating appliance C for cooking according to the present invention, the infrared sensor 10 is covered with the filter 14 and the side wall 16 formed along a periphery of the filter 14 and, hence, when the side wall 16 is made of a material having an effect sufficient to restrain penetration of light ( including one having no light transmittance), most of solar light energy is blocked from entering the infrared sensor 10 from lateral sides, thus making it possible to reduce the influence of ambient light on the output of the infrared sensor 10.

As described above, the induction heating appliance C for cooking according to the present invention includes the light guide portion 8a having the light guide path 8b that communicates the upper opening 36 confronting the top plate 4 with the lower opening 32 confronting the infrared sensor 10. This arrangement can limit a view angle of the infrared sensor 10 and restrain ambient light from entering the infrared sensor 10. Also, the provision of the infrared sensor 10 below the heating coil 6 can reduce influence of the high temperature of the heating coil 6 and that of the cooking container P on the infrared sensor 10. Further, the filter 14 is disposed between the infrared sensor 10 and the lower opening 32 and has light shielding characteristics that allow infrared rays having a range of wavelengths in which the infrared sensor 10 can detect to pass therethrough, but restrain transmission of light having a wavelength less than a predetermined one and contained a substantial amount in solar light. The filter 14 acts to remove dominant wavelength components of ambient light that has entered the light guide portion 8a through the upper opening 36 and passed through the light guide path 8b, and infrared rays emitted from the bottom surface of the cooking container P are concentrated by the lens 18 before they enter the infrared sensor 10, thus making it possible to restrain the influence of the ambient light.

Moreover, the substrate 12, on which the infrared sensor 10 is placed, is accommodated in the metallic case 30, which acts to restrain influence of electromagnetic wave noises and that of ambient light. Also, the side wall 16 operable to restrain penetration of solar light is disposed around the infrared sensor 10, and the filter 14 and the side wall 16 cover the infrared sensor 10 on the substrate 12, thereby making it possible to efficiently restrain ambient light that would enter the metallic case 30 after having passed through openings required for electric connection or the like. That is, it is likely that visible rays or the like contained in solar light L pass between the bottom surface of the cooking container P and the top plate 4, or penetrate the top plate 4 at locations where the cooking container P is not placed, reflect inside the induction heating appliance C for cooking, and pass through openings, which have been formed in the metallic case 30 for electric connection by necessity, or gaps in the metallic case 30. Even if such rays of light reach the infrared sensor 10 or its vicinities from various directions, the filter 14 and the side wall 16 provided around the filter 14 act to block infrared rays other than those from the cooking container P, thus making it possible to accurately detect the temperature of the cooking container P and control it to a target temperature.

Also, in the present invention, because the infrared sensor 10 is placed on the substrate 12, and the filter 14 is mounted on the substrate 12 so as to cover the infrared sensor 10, not only can the substrate 12 prevent entry of ambient light from below the substrate 12, but the provision of the amplifier or the like on the substrate 12 can also enlarge the output of the infrared sensor 10 and enhance a signal-to-noise ratio.

Further, in the present invention, the filter 14 is made up of a lens 18 for concentrating infrared rays on the infrared sensor 10 and a lens holding portion 14b provided around the lens 18 to hold the lens 18, and both the lens 18 and the lens holding portion 14b are unitarily formed with each other using a single resinous material. Accordingly, a structure required to realize a light concentrating function and a filtering function is simplified and can be accordingly readily mounted on the substrate 12, thus resulting in a reduction in cost. Also, because fixing the lens holding portion 14b can determine the position of the lens 18, the accuracy of a positional relationship between the lens 18 and the light receiving surface 10a of the infrared sensor 10 is enhanced and, hence, the accuracy of a field of view is enhanced. The side wall 16 and the filter 14 may be unitarily formed of a resin. In this case, because the light transmittance of the side wall 16 cannot be rendered to be zero, a light shielding effect obtained by only the side wall 16 is limited.

In the present invention, the substrate 12 having the infrared sensor 10 and the filter 14 is accommodated within the metallic case 30, which has the opening 33, through which infrared rays from the cooking container P pass and reach the infrared sensor 10, and the opening 34 through which the cables 22 for output signals pass. This arrangement is effective in that the metallic case 30 acts to block ambient light such as solar light L, and the filter 14 acts to further block the ambient light.

Also, in the present invention, the control panel 26 for initiating a heating operation is provided at a front portion of the induction heating appliance C for cooking, the metallic case 30 accommodating the infrared sensor 10 therein is provided below a lower surface of the heating coil 6 and on the side of the control panel 26 relative to the center of the heating coil 6, and the opening 34 in the metallic case 30 accommodating the infrared sensor 10 for allowing the cables 22 to pass therethrough is open toward the control panel 26. Accordingly, in applications where the induction heating appliance C for cooking is installed near a wall having a window 42, solar light L is irradiated to a rear portion of the induction heating appliance C for cooking, but because the opening 34 defined in the metallic case 30 to allow the cables 22 to pass therethrough is provided on the side opposite to a direction in which the solar light L is irradiated, the infrared sensor 10 is not adversely affected by the solar light L. Also, because the control means 24 connected to the cables 22 of the infrared sensor 10 is provided on the side of the control panel 26, connection of the cables 22 with the control means 24 can be easily conducted.

Fig. 9 shows a modification of the filter 14 and the side wall 16 both provided around the infrared sensor 10. The filter 14 confronting the light receiving surface 10a of the infrared sensor 10 and the lens holding portion 14b formed cylindrically around the infrared sensor 10 are unitarily formed of a material such as a resin having filtering properties, and a cylindrical side wall 16 formed of a material having high light shielding characteristics that do not allow transmission of light or having a light transmittance lower than the filter 14 is fitted into the lens holding portion 14b.

Because the lens 18, the filter 14, and the lens holding portion 14b are formed into one component part, this structure is simple and can be made at a low cost. Also, because no gaps are created between the filter 14 formed around the infrared sensor 10 and the lens holding portion 14b, and the side wall 16 having a high light shielding effect blocks ambient light from lateral sides, a stable effect of preventing entry of ambient light such as solar light L can be obtained.

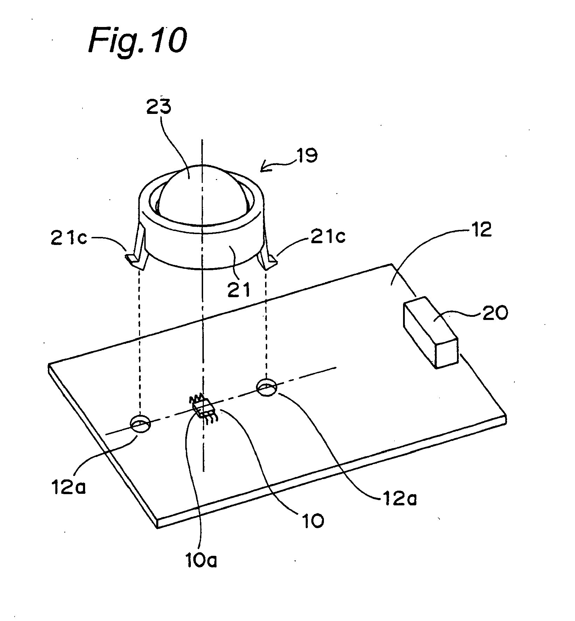

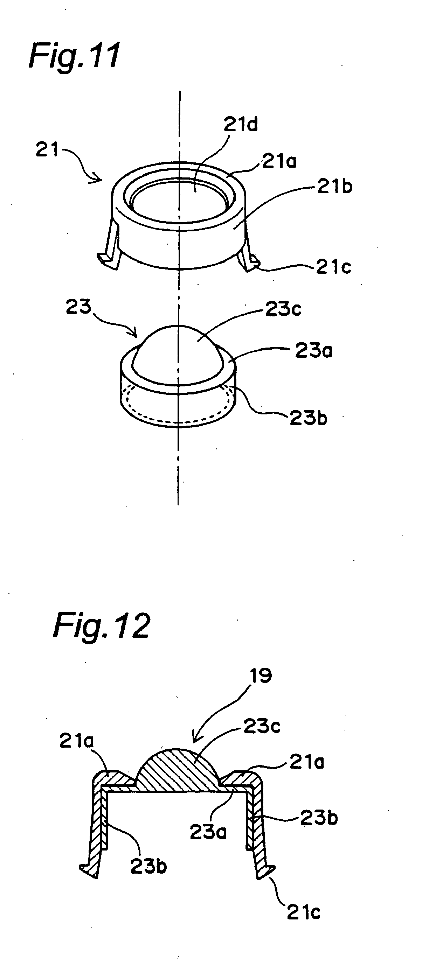

Figs. 10 to 12 show a modification of the filter 14 and the side wall 16 as shown in Fig. 1. As shown in Fig. 10, the infrared sensor 10 electrically connected to a peripheral circuit by soldering is fixedly mounted on the substrate 12. A filter unit 19 having a plurality of retaining hooks 21 c is secured to the substrate 12 by inserting the retaining hooks 21 c into respective holes 12a defined in the substrate 12 for engagement therewith, so that a positional relationship between the light receiving surface 10a of the infrared sensor 10 and a lens 23c may be determined. As shown in an exploded perspective view of an essential portion of Fig. 11 and in a sectional view of Fig. 12, the filter unit 19 includes a light shielding case 21 and a lens unit 23 fitted into a side wall 21 b of the light shielding case 21. The light shielding case 21 is formed of a resin having high light shielding properties or not allowing transmission of most of light. The side wall 21b is cylindrical, and the retaining hooks 21 c are unitarily formed with the side wall 21 b so as to extend therefrom. The light shielding case 21 has an upper portion 21 a unitarily formed therewith so as to extend generally parallel to the substrate 12 and having an opening 21 d defined therein. The upper portion 21 a has a slope formed on an inner side thereof so as to descend toward the lens 23c to thereby increase the amount of infrared rays from above while reducing the amount of infrared rays directed to the lens 23c from lateral sides thereof. The lens unit 23 is made up of the lens 23c, an upper portion 23a forming a periphery of the lens 23c to hold the lens 23c and extending generally parallel to the light receiving surface 10a of the infrared sensor 10, and a holding portion 23b for holding the upper portion 23a to maintain a vertical distance between the infrared sensor 10 and the lens 23c constant by maintaining a distance between an upper surface of the substrate 12 and the lens 23c constant. The positional relationship between the light receiving surface 10a of the infrared sensor 10 and the lens 23c is determined by the retaining hooks 21 c and the holes 12a. An upper surface of the upper portion 23a of the lens unit 23 is brought into contact with a lower surface of the upper portion 21 a of the light shielding case 21, and a spherical surface of the leans 23c is fitted into the opening 21 d in the upper portion 21 a of the light shielding case 21.

In this arrangement, because the lens unit 23 has the transmittance as shown in Fig. 5, most of solar light energy is removed thereby, and because the upper portion 23a of the lens unit 23 and the holding portion 23b constituting a side wall of the lens unit 23 are covered with the light shielding case 21 disposed outside the lens unit 23, having a null or very low transmittance and, hence, superior in light shielding properties, a path leading to the light receiving surface 10a of the infrared sensor 10 is blocked, in which path ambient light is incident on the holding portion 23b and the upper portion 23a of the lens unit 23 from various directions, reflects inside them, and enters the lens 23c, thus making it possible to considerably reduce the influence of ambient light. If the influence of the ambient light is allowable, the upper portion 21 a of the light shielding case 21 may be dispensed with. The use of the lens unit 23 having the filtering characteristics as shown in Fig. 5 is preferred in reducing the influence of the ambient light and simplifying the construction. If the lens unit 23 does not have the filtering characteristics as shown in Fig. 5, the use of a filter is preferred to remove a solar light component from light incident on the lens 23c. The use of the lens unit 23 having the above filtering characteristics can prevent ambient light from other than the cooking container P from entering the lens 23c and then entering the light receiving surface 10a of the infrared sensor 10 through the upper portion 23a and holding portion 23b, with a simple construction. Also, because the filter unit 19 is assembled by fitting the lens unit 23 into the light shielding case 21, the assembling work is simplified. Further, because the filter unit 19 is secured to the substrate 12 by inserting each retaining hook 21 c into a corresponding one of the holes 12a to engage the former with the latter, the positional relationship between the light receiving surface 10a of the infrared sensor 10 and the lens 23c hardly changes, and the field of view of the infrared sensor 10 is stabilized.

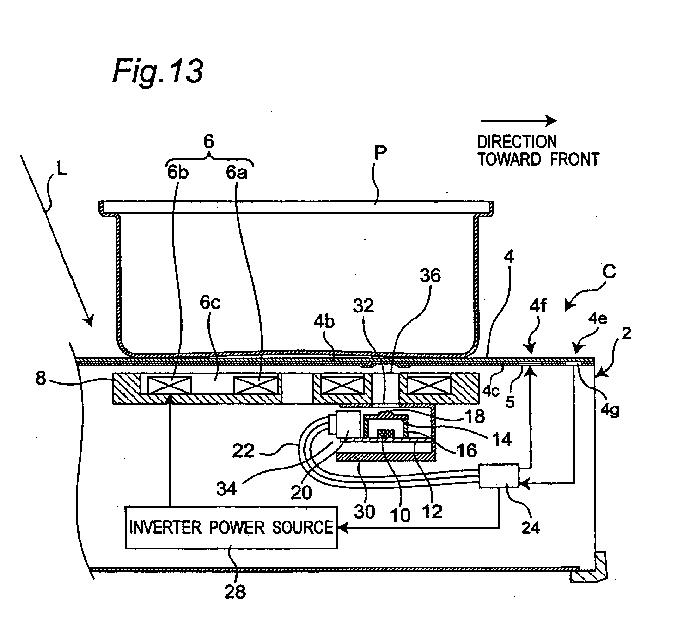

Fig. 13 shows a modification of the metallic case 30, in which the substrate 12 having the infrared sensor 10 mounted thereon is accommodated. In this modification, the induction heating appliance C for cooking includes an electrostatic type touch-sensitive operating portion 4e having electrodes 4g fitted to a lower surface of a front portion of the top plate 4 to initiate a heating operation, and a display 4f having a light emitting portion 5 disposed below the front portion of the top plate 4. In response to an operation of the electrostatic type touch-sensitive operating portion 4e, the control means 24 controls a light emitting operation of the light emitting portion 5 so that light emitted from the light emitting portion 5 and having passed through the top plate 4 can be viewed as a luminescent display from above the top plate 4. The opening 34, through which the cables 22 pass, is formed in that side wall of the plurality of side walls around the metallic case 30 which is positioned on the opposite side of the electrostatic type touch-sensitive operating portion 4e.

This arrangement is particularly effective in applications where there is a possibility that ambient light would enter the induction heating appliance C for cooking through a window of the display 4f that is intended to allow internal light to be emitted outside. Because the direction in which ambient light from the light transmitting window of the display 4f enters is on the side opposite to the opening 34 for allowing the cables 22 to pass therethrough, it is possible to considerably reduce the influence of ambient light.

Although in the above-described embodiment the filter is made of a material such as a resin, the material of the filter is not limited to the resin, and a material such as a glass, film or the like can be used for the filter if it has characteristics that can block light having predetermined wavelengths and allow infrared rays, corresponding to the temperature of the cooking container P to be measured, to pass therethrough.

### Industrial Applicability

As described above, the induction heating appliance C for cooking according to the present invention can accurately detect the temperature of the cooking container P and control it to a target temperature even in an environment in which the induction heating appliance C for cooking is exposed to ambient light such as solar light L and, hence, the induction heating appliance C for cooking according to the present invention is applicable to cooking appliances to be used indoors or outdoors.

## Claims

1. An induction heating appliance for cooking which comprises:
a body (2) constituting an outer shell;
a top plate (4) mounted on an upper portion of the body (2) to place a cooking container (P) thereon;
a heating coil (6) for generating a high frequency magnetic field to heat the cooking container (P);
a quantum type infrared sensor (10) disposed below the top plate (4) to detect infrared rays that are emitted from the cooking container (P) and pass through the top plate (4),
a light guide portion (8a) having a lower opening (32) confronting the infrared sensor (10), an upper opening (36) confronting the top plate (4) and a light guide path (8b) communicating the lower opening (32) with the upper opening (36);
a control means (24) for controlling a power supplied to the heating coil (6) based on an output of the infrared sensor (10);
a filter (14) disposed between the infrared sensor (10) and the lower opening (32) in the light guide portion (8a) so as to confront a light receiving surface (10a) of the infrared sensor (10) and having light shielding characteristics that allow transmission of infrared rays having a wavelength range, which the infrared sensor (10) can detect, but restrain transmission of light of a wavelength range less than a predetermined wavelength, in which solar light (L) is dominantly contained;
a printed circuit board (12) on which the infrared sensor (10) is placed; and
a side wall (16) disposed around the infrared sensor (10) to restrain transmission of solar light (L);
wherein the filter (14) and a holding portion (14b) provided around the filter (14) are unitarily formed of a resin, and the side wall (16) is fitted into the holding portion (14b); and
wherein the filter (14) and the side wall (16) are placed on the printed circuit board (12), and the infrared sensor (10) is covered with the filter (14), the side wall (16), and the printed circuit board (12).

2. An induction heating appliance for cooking which comprises:
a body (2) constituting an outer shell;
a top plate (4) mounted on an upper portion of the body (2) to place a cooking container (P) thereon;
a heating coil (6) for generating a high frequency magnetic field to heat the cooking container (P);
a quantum type infrared sensor (10) disposed below the top plate (4) to detect infrared rays that are emitted from the cooking container (P) and pass through the top plate (4),
a light guide portion (8a) having a lower opening (32) confronting the infrared sensor (10), an upper opening (36) confronting the top plate (4) and a light guide path (8b) communicating the lower opening (32) with the upper opening (36);
a control means (24) for controlling a power supplied to the heating coil (6) based on an output of the infrared sensor (10);
a filter (14) disposed between the infrared sensor (10) and the lower opening (32) in the light guide portion (8a) so as to confront a light receiving surface (10a) of the infrared sensor (10) and having light shielding characteristics that allow transmission of infrared rays having a wavelength range, which the infrared sensor (10) can detect, but restrain transmission of light of a wavelength range less than a predetermined wavelength, in which solar light (L) is dominantly contained;
a printed circuit board (12) on which the infrared sensor (10) is placed; and
a side wall (16) disposed around the infrared sensor (10) to restrain transmission of solar light (L);
wherein the filter (14) and a holding portion (14b) provided around the filter (14) are unitarily formed of a resin, and the holding portion (14b) is fitted into the side wall (16); and
wherein the filter (14) and the side wall (16) are placed on the printed circuit board (12), and the infrared sensor (10) is covered with the filter (14), the side wall (16), and the printed circuit board (12).

3. The induction heating appliance for cooking according to claim 1 or 2, wherein the filter (14) has light shielding characteristics in which a transmittance of light having a wavelength less than approximately 0.9 µm is lower than that of light having a wavelength greater than approximately 0.9 µm in a wavelength range in which the output of the infrared sensor (10) can be obtained.

4. The induction heating appliance for cooking according to claim 1, wherein the filter (14) is made of resin, and has a lens (18) for concentrating infrared rays emitted from the cooking container (P) and having passed through the top plate (4) on the infrared sensor (10) and a lens holding portion (14a) unitarily formed with and around the lens (18) to hold the lens, and wherein the side wall (16) has an upper portion unitarily formed therewith so as to extend generally parallel to the printed circuit board (12), and the lens (18) is fitted into an opening defined in the upper portion.

5. The induction appliance for cooking according to claim1 or 2, further comprising a coil support base (8) formed to fixedly mount the heating coil (6) thereon and having the light guide portion (8a) formed therewith, and a metallic case (30) for accommodating the printed circuit board (12), the infrared sensor (10), and the filter (14) therein, wherein the metallic case (30) has a first opening (33) defined in an upper wall thereof so as to confront the infrared sensor (19) so that infrared rays emitted from the cooking container (P) and having passed through the light guide portion (8a) are received by the infrared sensor (10) through the first opening (33), and a second opening (34) defined in a side wall of the metallic case (30) so that a cable for outputting a signal passes through the second opening (34), and wherein the upper wall of the metallic case (30) is held in contact with a lower surface of the coil support base (8).

6. The induction heating appliance for cooking according to claim 5, further comprising a control panel (26) disposed at a front portion of the body (2) to initiate a heating operation, wherein the metallic case (30) is positioned below the heating coil (6) and on a side of the control panel (26) relative to a center of the heating coil (6), and wherein the second opening (34) is open toward the control panel (26).

7. The induction heating appliance for cooking according to 1 or 2, wherein the upper opening (36) is provided at a location on a straight line, which extends across a center of the heating coil (6) in a direction perpendicular to a front surface of the body (2), and forwardly of the center of the heating (6), and wherein the top plate (4) has a cutout or indication formed by printing so as to confront the upper opening (36), the cutout or indication being an infrared incident region which a user can view.

8. The induction heating appliance for cooking according to claim 5, further comprising an electrostatic type touch-sensitive operating portion (4e) having electrodes (4g) fitted to a lower surface of a front portion of the top plate (4) to initiate a heating operation, and a display (4f) having a light emitting portion (5) disposed below the front portion of the top plate (4), wherein light emitted from the light emitting portion (5) and having passed through the top plate (4) can be viewed as a luminescent display from above the top plate (4), and wherein the second opening (34) is open toward a side opposite to the display (4f).

9. The induction heating appliance for cooking according to claim 1 or 2, wherein the infrared sensor (10) is made of a silicon photodiode having a maximum sensitivity wavelength in a range of about 0.9µm to about 1µm.

## Patentansprüche

1. Induktionsheiz-Kocheinrichtung umfassend:
ein Gehäuse (2), welches eine Außenhülle bildet;
eine Deckplatte (4), welche an einem oberen Abschnitt des Gehäuses (2) befestigt ist, um ein Kochgefäß (P) darauf zu stellen;
eine Heizspirale (6) zum Erzeugen eines Hochfrequenz-Magnetfeldes, um das Kochgefäß (P) zu erhitzen;
einen Quanten-Infrarotsensor (10) angeordnet unter der Deckplatte (4), zum Erfassen von Infrarotstrahlen, die von dem Kochgefäß (P) abgegeben werden und durch die Deckplatte (4) treten,
einen Lichtleiterabschnitt (8a) mit einer unteren Öffnung (32), welche dem Infrarotsensor (10) gegenüber liegt, einer oberen Öffnung (36), welche der Deckplatte (4) gegenüber liegt, und einer Lichtleiterbahn (8b), welche die untere Öffnung (32) mit der oberen Öffnung (36) verbindet;
ein Steuermittel (24) zum Steuern eines Stromes, welcher an die Heizspirale (6) bereitgestellt wird, beruhend auf einer Ausgabe des Infrarotsensors (10);
einen Filter (14), derart zwischen dem Infrarotsensor (10) und der unteren Öffnung (32) in dem Lichtleiterabschnitt (8a) angeordnet, dass der Filter (14) einer Lichtauffangfläche (10a) des Infrarotsensors (10) gegenüber liegt, und mit Lichtabschirmeigenschaften, die die Übertragung von Infrarotstrahlen in einem Wellenlängenbereich erlauben, den der Infrarotsensor (10) erfassen kann, aber die Übertragung von Licht in einem Wellenlängenbereich unterhalb einer vorbestimmten Wellenlänge unterdrücken, in dem vorrangig Sonnenlicht (L) enthalten ist;
eine Leiterplatte (12), auf welcher der Infrarotsensor (10) befestigt ist; und
eine Seitenwand (16), angeordnet um den Infrarotsensor (10) herum, zum Unterdrücken der Übertragung von Sonnenlicht (L);
wobei der Filter (14) und ein Halteabschnitt (14b), welcher um den Filter (14) herum bereitgestellt ist, einheitlich aus einem Harz gebildet sind, und wobei die Seitenwand (16) in den Halteabschnitt (14b) eingepasst ist; und
wobei der Filter (14) und die Seitenwand (16) auf der Leiterplatte (12) angeordnet sind, und wobei der Infrarotsensor (10) von dem Filter (14), der Seitenwand (16), und der Leiterplatte (12) bedeckt ist.

2. Induktionsheiz-Kocheinrichtung umfassend:
ein Gehäuse (2), welches eine Außenhülle bildet;
eine Deckplatte (4), welche an einem oberen Abschnitt des Gehäuses (2) befestigt ist, um ein Kochgefäß (P) darauf zu stellen;
eine Heizspirale (6) zum Erzeugen eines Hochfrequenz-Magnetfeldes zum Erhitzen des Kochgefäßes (P);
einen Quanten-Infrarotsensor (10), angeordnet unter der Deckplatte (4), zum Erfassen von Infrarotstrahlen, die von dem Kochgefäß (P) abgegeben werden und durch die Deckplatte (4) treten,
einen Lichtleiterabschnitt (8a) mit einer unteren Öffnung (32), welche dem Infrarotsensor (10) gegenüber liegt, einer oberen Öffnung (36), welche der Deckplatte (4) gegenüber liegt, und einer Lichtleiterbahn (8b), welche die untere Öffnung (32) mit der oberen Öffnung (36) verbindet;
ein Steuermittel (24) zum Steuern eines Stromes, welcher an die Heizspirale (6) bereitgestellt wird, beruhend auf einer Ausgabe des Infrarotsensors (10);
einem Filter (14), derart zwischen dem Infrarotsensor (10) und der unteren Öffnung (32) in dem Lichtleiterabschnitt (8a) angeordnet, dass der Filter (14) einer Lichtauffangfläche (10a) des Infrarotsensors (10) gegenüber liegt, und mit Lichtabschirmeigenschaften, die die Übertragung von Infrarotstrahlen in einem Wellenlängenbereich erlauben, den der Infrarotsensor (10) erfassen kann, aber die Übertragung von Licht in einem Wellenlängenbereich unterhalb einer vorbestimmten Wellenlänge unterdrücken, in dem vorrangig Sonnenlicht (L) enthalten ist;
eine Leiterplatte (12) auf der der Infrarotsensor (10) befestigt ist; und
eine Seitenwand (16), angeordnet um den Infrarotsensor (10) herum, zum Unterdrücken der Übertragung von Sonnenlicht (L);
wobei der Filter (14) und ein Halteabschnitt (14b), welcher um den Filter (14) herum bereitgestellt ist, einheitlich aus einem Harz gebildet sind, und wobei der Halteabschnitt (14b) in die Seitenwand (16) eingepasst ist; und
wobei der Filter (14) und die Seitenwand (16) auf der Leiterplatte (12) angeordnet sind, und wobei der Infrarotsensor (10) von dem Filter (14), der Seitenwand (16), und der Leiterplatte (12) bedeckt ist.

3. Induktionsheiz-Kocheinrichtung nach einem der Ansprüche 1 oder 2,
wobei der Filter (14) Lichtabschirmeigenschaften aufweist, wonach eine Transmission von Licht mit einer Wellenlänge kleiner als etwa 0.9 µm niedriger ist als seine Transmission von Licht mit einer Wellenlänge größer als etwa 0.9 µm, in einem Wellenlängenbereich, in dem die Ausgabe des Infrarotsensors (10) erhalten werden kann.

4. Induktionsheiz-Kocheinrichtung nach Anspruch 1,
wobei der Filter (14) aus Harz gebildet ist und eine Linse (18) aufweist, zum Konzentrieren von Infrarotstrahlen, die von dem Kochgefäß (P) abgegeben und durch die Deckplatte (4) getreten sind, auf den Infrarotsensor (10), und einen Linsenhalteabschnitt (14a), welcher einheitlich mit der und um die Linse (18) gebildet ist, um die Linse (18) zu halten, und wobei die Seitenwand (16) einen oberen Abschnitt aufweist, welcher derart einheitlich mit ihr gebildet ist, dass er sich im Wesentlichen parallel zu der Leiterplatte (12) erstreckt, und wobei die Linse (18) in eine Öffnung eingepasst ist, welche in dem oberen Abschnitt definiert ist.

5. Induktionsheiz-Kocheinrichtung nach einem der Ansprüche 1 oder 2,
ferner umfassend eine Spiralstütze (8), welche gebildet ist, um die Heizspirale (6) unbeweglich darauf zu befestigen, und wobei der Lichtleiterabschnitt (8a) mit dieser gebildet ist, und ein Metallgehäuse (30) zum Aufnehmen der Leiterplatte (12), des Infrarotsensors (10) und des Filters (14) darin, wobei das Metallgehäuse (30) eine erste Öffnung (33) aufweist, welche derart in einer Oberwand davon definiert ist, dass sie dem Infrarotsensor (19) gegenüber liegt, so dass Infrarotstrahlen, welche von dem Kochgefäß (P) abgegeben und durch den Lichtleiterabschnitt (8a) getreten sind, von dem Infrarotsensor (10) durch die erste Öffnung (33) empfangen werden, und eine zweite Öffnung (34), welche derart in einer Seitenwand des Metallgehäuses (30) definiert ist, dass ein Kabel zum Ausgeben eines Signals durch die zweite Öffnung (34) tritt, und wobei die Oberwand des Metallgehäuses (30) in Kontakt mit einer unteren Oberfläche der Spiralstütze (8) gehalten wird.

6. Induktionsheiz-Kocheinrichtung nach Anspruch 5,
ferner umfassend ein Bedienfeld (26), angeordnet an einem Vorderabschnitt des Gehäuses (2), zum Veranlassen eines Erhitzungsvorgangs, wobei das Metallgehäuse (30) unter der Heizspirale (6) und an einer Seite des Bedienfeldes (26) angeordnet ist, relativ zu einem Mittelpunkt der Heizspirale (6), und wobei die zweite Öffnung (34) zu dem Bedienfeld (26) hin offen ist.

7. Induktionsheiz-Kocheinrichtung nach einem der Ansprüche 1 oder 2,
wobei die obere Öffnung (36) an einer Stelle auf einer geraden Linie angeordnet ist, welche sich durch einen Mittelpunkt der Heizspirale (6) erstreckt, in einer Richtung senkrecht zu der Vorderfläche des Gehäuses (2) und vorwärts von dem Mittelpunkt der Heizspirale (6), und wobei die Deckplatte (4) einen Ausschnitt oder eine Anzeige aufweist, derart durch Drucken gebildet, dass der Ausschnitt oder die Anzeige der oberen Öffnung (36) gegenüber liegt, wobei der Ausschnitt oder die Anzeige ein Infrarot-Einfallbereich ist, den ein Benutzer betrachten kann.

8. Induktionsheiz-Kocheinrichtung nach Anspruch 5,
ferner umfassend einen elektrostatischen berührungsempfindlichen Betriebsabschnitt (4e) mit Elektroden (4g), welche an einer unteren Oberfläche eines Vorderabschnitts der Deckplatte (4) befestigt sind, zum Veranlassen eines Erhitzungsvorgangs, und eine Anzeige (4f) mit einem lichtemittierenden Abschnitt (5), welcher unter dem Vorderabschnitt der Deckplatte (4) angeordnet ist, wobei Licht, welches von dem lichtemittierenden Abschnitt (5) abgegeben und durch die Deckplatte (4) getreten ist, als eine Leuchtanzeige von oberhalb der Deckplatte (4) gesehen werden kann, und wobei die zweite Öffnung (34) zu einer Seite hin offen ist, welche der Anzeige (4f) gegenüber liegt.

9. lnduktionsheiz-Kocheinrichtung nach einem der Ansprüche 1 oder 2,
wobei der Infrarotsensor (10) aus einer Silizium-Photodiode mit einer maximalen Wellenlängenempfindlichkeit in einem Bereich von etwa 0.9 µm bis etwa 1 µm gebildet ist.

## Revendications

1. Appareil de chauffage par induction destiné à la cuisson, qui comprend :
un corps (2) constitué d'une coque externe ;
une plaque supérieure (4) montée sur une partie supérieure du corps (2) et sur laquelle est placé un récipient de cuisson (P) ;
une bobine de chauffage (6) pour générer un champ magnétique haute fréquence afin de chauffer le récipient de cuisson (P) ;
un capteur à infrarouges de type quantique (10) disposé en-dessous de la plaque supérieure (4) pour détecter des rayons infrarouges qui sont émis à partir du récipient de cuisson (P) et pour passer à travers la plaque supérieure (4),
une partie de guidage de lumière (8a) ayant une ouverture inférieure (32) faisant face au capteur à infrarouges (10), une ouverture supérieure (36) faisant face à la plaque supérieure (4) et un chemin de guidage de lumière (8b) permettant à l'ouverture inférieure (32) et à l'ouverture supérieure (36) de communiquer entre elles ;
un moyen de commande (24) pour commander une puissance fournie à la bobine de chauffage (6) sur la base d'une sortie du capteur à infrarouges (10) ;
un filtre (14) disposé entre le capteur à infrarouges (10) et l'ouverte inférieure (32) dans la partie de guidage de lumière (8a) de manière à faire face à une surface réceptrice de lumière (10a) du capteur à infrarouges (10) et ayant des caractéristiques de protection contre la lumière qui permettent la transmission des rayons infrarouges ayant une plage de longueurs d'ondes, que le capteur à infrarouges (10) est capable de détecter, mais qui limitent la transmission de lumière d'une plage de longueurs d'ondes inférieure à une longueur d'onde prédéterminée, où la lumière solaire (L) est présente de façon prédominante ;
une carte de circuit imprimé (12) sur laquelle est placé le capteur à infrarouges (10); et
une paroi latérale (16) disposée autour du capteur à infrarouges (10) pour limiter la transmission de la lumière solaire (L) ;
où le filtre (14) et une partie de maintien (14b) prévue autour du filtre (14) sont unitairement réalisés en résine, et la paroi latérale (16) est ajustée dans la partie de maintien (14b) ; et
où le filtre (14) et la paroi latérale (16) sont placés sur la carte de circuit imprimé (12), et le capteur à infrarouges (10) est recouvert par le filtre (14), la paroi latérale (16), et la carte de circuit imprimé (12).

2. Appareil de chauffage par induction destiné à la cuisson, qui comprend :
un corps (2) constitué d'une coque externe ;
une plaque supérieure (4) montée sur une partie supérieure du corps (2) et sur laquelle est placé un récipient de cuisson (P) ;
une bobine de chauffage (6) pour générer un champ magnétique haute fréquence afin de chauffer le récipient de cuisson (P) ;
un capteur à infrarouges de type quantique (10) disposé en-dessous de la plaque supérieure (4) pour détecter des rayons infrarouges qui sont émis à partir du récipient de cuisson (P) et pour passer à travers la plaque supérieure (4),
une partie de guidage de lumière (8a) ayant une ouverture inférieure (32) faisant face au capteur à infrarouges (10), une ouverture supérieure (36) faisant face à la plaque supérieure (4) et un chemin de guidage de lumière (8b) permettant à l'ouverture inférieure (32) et à l'ouverture supérieure (36) de communiquer entre elles ;
un moyen de commande (24) pour commander une puissance fournie à la bobine de chauffage (6) sur la base d'une sortie du capteur à infrarouges (10) ;
un filtre (14) disposé entre le capteur à infrarouges (10) et l'ouverte inférieure (32) dans la partie de guidage de lumière (8a) de manière à faire face à une surface réceptrice de lumière (10a) du capteur à infrarouges (10) et ayant des caractéristiques de protection contre la lumière qui permettent la transmission des rayons infrarouges ayant une plage de longueurs d'ondes, que le capteur à infrarouges (10) est capable de détecter, mais qui limitent la transmission de lumière d'une plage de longueurs d'ondes inférieure à une longueur d'onde prédéterminée, où la lumière solaire (L) est présente de façon prédominante ;
une carte de circuit imprimé (12) sur laquelle est placé le capteur à infrarouges (10) ; et
une paroi latérale (16) disposée autour du capteur à infrarouges (10) pour limiter la transmission de la lumière solaire (L) ;
où le filtre (14) et une partie de maintien (14b) prévue autour du filtre (14) sont unitairement réalisés en résine, et la partie de maintien (14b) est ajustée dans la paroi latérale (16) ; et
où le filtre (14) et la paroi latérale (16) sont placés sur la carte de circuit imprimé (12), et le capteur à infrarouges (10) est recouvert par le filtre (14), la paroi latérale (16), et la carte de circuit imprimé (12).

3. Appareil de chauffage par induction destiné à la cuisson selon la revendication 1 ou 2, dans lequel le filtre (14) possède des caractéristiques de protection contre la lumière où une transmittance de la lumière ayant une longueur d'onde inférieure à environ 0,9µm est inférieure à celle de la lumière ayant une longueur d'onde supérieure à environ 0,9µm dans une plage de longueurs d'ondes où la sortie du capteur à infrarouges (10) peut être obtenue.

4. Appareil de chauffage par induction destiné à la cuisson selon la revendication 1, dans lequel le filtre (14) est réalisé en résine, et possède une lentille (18) pour concentrer les rayons infrarouges émis à partir du récipient de cuisson (P) et ayant traversé la plaque supérieure (4) sur le capteur à infrarouges (10) et une partie de maintien de lentille (14a) unitairement formée avec et autour de la lentille (18) pour maintenir la lentille, et dans lequel la paroi latérale (16) présente une partie supérieure unitairement formée avec celle-ci de manière à s'étendre de manière globalement parallèle à la carte de circuit imprimé (12), et la lentille (18) est ajustée dans une ouverture définie dans la partie supérieure.

5. Appareil de chauffage par induction destiné à la cuisson selon la revendication 1 ou 2, comprenant en outre une base de support de bobine (8) formée pour monter solidement la bobine de chauffage (6) sur celle-ci et ayant la partie de guidage de lumière (8a) formée avec celle-ci, et un boîtier métallique (30) pour y loger la carte de circuit imprimé (12), le capteur à infrarouges (10), et le filtre (14), où une première ouverture (33) du boîtier métallique (30) est définie dans une paroi supérieure de celui-ci de manière à faire face au capteur à infrarouges (19) de sorte que les rayons infrarouges émis à partir du récipient de cuisson (P) et ayant traversé la partie de guidage de lumière (8a) soient reçus par le capteur à infrarouges (10) à travers la première ouverture (33), et une deuxième ouverture (34) définie dans une paroi latérale du boîtier métallique (30) de sorte qu'un câble destiné à délivrer en sortie un signal passe à travers la deuxième ouverture (34), et dans lequel la paroi supérieure du boîtier métallique (30) est maintenue en contact avec une surface inférieure de la base de support de bobine (8).

6. Appareil de chauffage par induction destiné à la cuisson selon la revendication 5, comprenant en outre un panneau de commande (26) disposé au niveau d'une partie avant du corps (2) pour commencer une opération de chauffage, dans lequel le boîtier métallique (30) est positionné en-dessous de la bobine de chauffage (6) et sur un côté du panneau de commande (26) par rapport à un centre de la bobine de chauffage (6), et dans lequel la deuxième ouverture (34) est ouverte vers le panneau de commande (26).

7. Appareil de chauffage par induction destiné à la cuisson selon la revendication 1 ou 2, dans lequel l'ouverture supérieure (36) est prévue au niveau d'un emplacement sur une ligne droite, qui s'étend à travers un centre de la bobine de chauffage (6) dans une direction perpendiculaire à une surface avant du corps (2), et vers l'avant du centre de la bobine de chauffage (6), et dans lequel la plaque supérieure (4) présente une découpe ou une indication formée par impression de manière à faire face à l'ouverture supérieure (36), la découpe ou l'indication étant une région infrarouge incidente que peut voir un utilisateur.

8. Appareil de chauffage par induction destiné à la cuisson selon la revendication 5, comprenant en outre une partie d'actionnement sensible au toucher de type électrostatique (4e) ayant des électrodes (4g) ajustées sur une surface inférieure d'une partie avant de la plaque supérieure (4) pour commencer une opération de chauffage, et un dispositif d'affichage (4f) ayant une partie émettrice de lumière (5) disposée en-dessous de la partie avant de la plaque supérieure (4), dans lequel on peut voir la lumière émise à partir de la partie émettrice de lumière (5) et ayant traversé la plaque supérieure (4) du dessus de la plaque supérieure (4) comme un dispositif d'affichage luminescent, et dans lequel la deuxième ouverture (34) est ouverte vers un côté opposé au dispositif d'affichage (4f).

9. Appareil de chauffage par induction destiné à la cuisson selon la revendication 1 ou 2, dans lequel le capteur à infrarouges (10) est réalisé en photodiode de silicium présentant une longueur d'onde de sensibilité maximale dans un intervalle d'environ 0,9µm à environ 1µm.
